# EUROPÄISCHE PATENTANMELDUNG

(11) **EP 2 551 774 A1**
(43) Veröffentlichungstag der Anmeldung: **30.01.2013**
(21) Anmeldenummer: 12172702.8
(22) Anmeldetag: 20.06.2012
(51) Int. Cl.: G06F 11/36, G06F 11/07

(54) **Verfahren und Vorrichtung zum Testen eines auf einem Speicher eines elektrischen Gerätes gespeicherten Programms**

(30) Priorität: 26.07.2011 DE 102011079786
(71) Anmelder: HILTI Aktiengesellschaft, 9494 Schaan (LI)
(72) Erfinder: Beck, Wolfgang, 86987 Schwabsoien (DE)

(57) **Zusammenfassung**

Das erfindungsgemäße Verfahren zum Testen eines auf einem Speicher eines elektrischen Gerätes gespeicherten Programms aus einer Mehrzahl von Modulen beinhaltet folgende Schritte: Testen des Programms während des Programmlaufs mittels zumindest eines vorbestimmten Sicherheitstests, und Testen zumindest eines Moduls der Mehrzahl von Modulen während des Programmlaufs mittels zumindest eines vorbestimmten Modultests.

## Beschreibung

### GEBIET DER ERFINDUNG

Die vorliegende Erfindung betrifft ein Verfahren und eine Vorrichtung zum Testen eines auf einem Speicher eines elektrischen Gerätes gespeicherten Programms aus einer Mehrzahl von Modulen. Der Speicher ist beispielsweise ein RAM-Speicher (RAM; Random-Access-Memory) und das elektrische Gerät ist beispielsweise eine Handwerkzeugmaschine, insbesondere eine elektrische Handwerkzeugmaschine, wie zum Beispiel ein Elektroschrauber.

Herkömmlicherweise gibt es zwei grundlegend unterschiedliche Testarten für Programme oder Software, nämlich Modultests und Sicherheitstests. Sowohl die Sicherheitstests als auch die Modultests sollen sicherstellen, dass keine Fehler in dem Programm sind bzw. solche ohne sicherheitskritische Auswirkungen bleiben. Vorgaben für die Modultests und Sicherheitstests ergeben sich aus den einschlägigen Normen, zum Beispiel aus der IEC 61508 Teil 3 oder aus der IEC 60730.

Zum einen werden die Programme vor ihrer Auslieferung mittels der Modultests getestet. Ein Programm besteht üblicherweise aus einer Mehrzahl von Modulen, Programmmodulen oder Programmteilen, die über definierte Schnittstellen miteinander kommunizieren können. Der Modultest, Komponententest oder auch Unit-Test ist der Software-Test dieser Module oder Programmteile. Ziel des Modultests ist es, frühzeitig Programmfehler in den Modulen des Programms aufzufinden. Die Funktionalität der Module kann häufig einfacher getestet werden, als wenn die Module bereits in dem Programm zusammengefügt sind, da in diesem Fall die Abhängigkeit der Einzelmodule mit in Betracht gezogen werden müssten.

Nach Integration der einzelnen Module in das Programm und Auslieferung des Programms werden die Sicherheitstests zur Laufzeit der Software durchgeführt.

Allerdings ist es möglich, dass sich Fehler in einem Modul des Programms erst während des Programmlaufs auf dem elektrischen Gerät bemerkbar machen, die nicht mittels der Sicherheitstests detektierbar sind.

### OFFENBARUNG DER ERFINDUNG

Das erfindungsgemäße Verfahren zum Testen eines auf einem Speicher eines elektrischen Gerätes gespeicherten Programms aus einer Mehrzahl von Modulen beinhaltet folgende Schritte: Testen des Programms während des Programmlaufs mittels zumindest eines vorbestimmten Sicherheitstests, und Testen zumindest eines Moduls der Mehrzahl von Modulen während des Programmlaufs mittels zumindest eines vorbestimmten Modultests.

Erfindungsgemäß ist es möglich, auch solche Fehler, die nur zur Laufzeit des Programms auf dem elektrischen Gerät auftreten, aber nur von einem Modultest und nicht von einem Sicherheitstest detektierbar sind, zu erkennen. In Folge dessen kann das elektrische Gerät in einen sicheren Zustand überführt werden. Folglich werden erfindungsgemäß mehr Tests, insbesondere Modultests, während der Laufzeit des Programms auf dem elektrischen Gerät durchgeführt. Dadurch wird die Sicherheit des elektrischen Geräts erhöht.

Darüber hinaus werden die investierte Arbeitszeit und die investierten Kosten für die Erstellung der Modultests ein weiteres Mal während der Laufzeit ausgenutzt. Folglich steigt das Maß an gewonnener Systemsicherheit bei gleichem Arbeits- und Kosteneinsatz.

Das Programm ist ein Ablaufprogramm, Softwareprogramm oder Software, welches insbesondere zum Steuern des elektrischen Geräts verwendet wird. Das jeweilige Modul kann auch als vorbestimmter Programmteil des Programms bezeichnet werden. Der Modultest, Komponententest oder Unit-Test ist der Software-Test des jeweiligen Moduls oder Programmteils. Der Modultest umfasst auch den Test einer oder mehrerer Funktionen des jeweiligen Moduls.

Ein Beispiel für ein Modul eines Programms für das elektrische Gerät kann ein PID-Regler-Modul sein. Dabei wird die Modulfunktion des PID-Regler-Moduls mittels des entsprechenden Modultests mit bekannten Regelabweichungen aufgerufen, und der Modultest überprüft die erwartete Reglerantwort auf Korrektheit. Erfindungsgemäß wird dieser Test auch während der Laufzeit des Programms auf dem elektrischen Gerät durchgeführt.

Während des Programmlaufs meint während des Programmlaufs des Programms auf dem elektrischen Gerät. Darunter ist auch der Start der Ausführung des Programms auf dem elektrischen Gerät zu verstehen.

Bei einer Ausführungsform wird eine Mehrzahl vorbestimmter Modultests bereitgestellt, wobei jeweils ein Modultest der Mehrzahl vorbestimmter Modultests zum Testen eines Moduls der Mehrzahl der Module vorbestimmt wird.

Bei einer weiteren Ausführungsform wird jedes Modul der Mehrzahl der Module mittels des jeweiligen zugeordneten Modultests während des Programmlaufs getestet.

Bei einer weiteren Ausführungsform werden bei dem jeweiligen Modultest dem Modul feste Eingangsgrößen eingegeben, die nach der Eingabe der festen Eingangsgrößen resultierenden Ausgangsgrößen werden erfasst, und die erfassten Ausgangsgrößen werden mit Soll-Ausgangsgrößen zur Bereitstellung eines Modultest-Ergebnisses verglichen. Die festen Eingangsgrößen können auch als vorbestimmte Eingangsgrößen bezeichnet werden. Ferner können die Soll-Ausgangsgrößen auch als vorbestimmte Ausgangsgrößen bezeichnet werden.

Bei einer weiteren Ausführungsform wird bei Vorliegen eines bestimmten Modultest-Ergebnisses eine bestimmte Sicherheitsmaßnahme aus einer Mehrzahl vorbestimmter Sicherheitsmaßnahmen ausgewählt und durchgeführt.

Die Mehrzahl vorbestimmter Sicherheitsmaßnahmen umfasst beispielsweise ein Stromlosschalten des elektrischen Gerätes, ein Überführen des elektrischen Gerätes in einen vorbestimmten sicheren Zustand und ein sicheres Herunterfahren der Steuervorrichtung des elektrischen Gerätes.

Bei einer weiteren Ausführungsform wird zumindest eine Hardware-Komponente des elektrischen Gerätes mittels des zumindest einen Sicherheitstests während des Programmlaufs getestet.

Beispiele für solche Hardware-Komponenten sind RAM-Speicher, ROM-Speicher, Flash-Speicher, Multiplexer, Taktquellen oder Watch-Dog-Vorrichtungen.

Weiterhin wird ein Computerprogrammprodukt vorgeschlagen, welches auf einer programmgesteuerten Einrichtung die Durchführung eines wie oben erläuterten Verfahrens zum Testen eines auf einem Speicher eines elektrischen Gerätes gespeicherten Programms veranlasst.

Ein Computerprogramm-Produkt wie ein Computerprogramm-Mittel kann beispielsweise als Speichermedium, wie Speicherkarte, USB-Stick, Floppy, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Ferner wird eine Testvorrichtung zum Testen eines auf einem Speicher eines elektrischen Gerätes gespeicherten Programms aus einer Mehrzahl von Modulen vorgeschlagen. Die Testvorrichtung hat ein erstes Testmittel und ein zweites Testmittel. Das erste Testmittel ist dazu eingerichtet, das Programm während des Programmlaufs mittels zumindest eines vorbestimmten Sicherheitstests zu testen. Das zweite Testmittel ist dazu eingerichtet, zumindest ein Modul der Mehrzahl von Modulen während des Programmlaufs mittels zumindest eines vorbestimmten Modultests zu testen.

Bei einer Ausführungsform ist eine Speichervorrichtung zum Speichern einer Mehrzahl vorbestimmter Modultests vorgesehen, wobei jeweils ein Modultest der Mehrzahl vorbestimmter Modultests zum Testen eines Moduls der Mehrzahl der Module vorbestimmt ist.

Bei einer weiteren Ausführungsform ist das zweite Testmittel dazu eingerichtet, jedes Modul der Mehrzahl der Module mittels des jeweiligen zugeordneten Modultests während des Programmlaufs zu testen.

Bei einer weiteren Ausführungsform ist das zweite Testmittel dazu eingerichtet, dem jeweiligen Modul bei dem jeweiligen zugeordneten Modultest feste Eingangsgrößen einzugeben, die nach der Eingabe der festen Eingangsgrößen resultierenden Ausgangsgrößen zu erfassen und die erfassten Ausgangsgrößen mit Soll-Ausgangsgrößen zur Bereitstellung eines Modultest-Ergebnisses zu vergleichen.

Bei einer weiteren Ausführungsform ist ein Sicherheitsmittel vorgesehen, welches dazu eingerichtet ist, bei Vorliegen eines bestimmten Modultest-Ergebnisses eine bestimmte Sicherheitsmaßnahme aus einer Mehrzahl vorbestimmter Sicherheitsmaßnahmen auszuwählen und durchzuführen.

Das jeweilige Mittel, erstes Testmittel, zweites Testmittel und Sicherheitsmittel, kann hardwaretechnisch oder auch softwaretechnisch implementiert sein. Bei einer hardwaretechnischen Implementierung kann das jeweilige Mittel als Vorrichtung oder als Teil einer Vorrichtung, zum Beispiel als Computer oder als Microprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Weiterhin wird eine Steuervorrichtung zum Steuern eines elektrischen Gerätes vorgeschlagen, welche eine wie vorstehend beschriebene Testvorrichtung zum Testen eines auf einem Speicher des elektrischen Gerätes gespeicherten Programms aus einer Mehrzahl von Modulen aufweist.

Ferner wird ein elektrisches Gerät mit einer wie oben beschriebenen Testvorrichtung zum Testen eines auf einem Speicher eines elektrischen Gerätes gespeicherten Programms aus einer Mehrzahl von Modulen vorgeschlagen.

Das elektrische Gerät ist beispielsweise eine Handwerkzeugmaschine oder ein Akkumulator für eine Handwerkzeugmaschine. Die Handwerkzeugmaschine ist insbesondere eine elektrische Handwerkzeugmaschine, wie zum Beispiel ein Elektroschrauber.

Der Elektroschrauber hat ein Gehäuse mit einem Handgriff, mittels welchem ein Anwender den Elektroschrauber halten und führen kann. Ein Taster an dem Handgriff ermöglicht dem Anwender den Elektroschrauber in Betrieb zu nehmen. Beispielsweise muss der Anwender den Taster durchgehend gedrückt halten, um den Elektroschrauber in Betrieb zu halten.

Der Elektroschrauber hat eine Werkzeugaufnahme, in welche der Anwender ein Schrauberbit einsetzen kann. Bei Betätigen des Tasters dreht ein Elektromotor die Werkzeugaufnahme um ihre Achse. Der Elektromotor ist über eine Spindel und ggf. weitere Komponenten eines Antriebsstrangs, z.B. Kupplung, Getriebe, mit der Werkzeugaufnahme gekoppelt.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: ein schematisches Ablaufdiagramm eines ersten Ausführungsbeispiels eines Verfahrens zum Testen eines auf einem Speicher eines elektrischen Gerätes gespeicherten Programms,
- Fig. 2: ein schematisches Ablaufdiagramm eines zweiten Ausführungsbeispiels eines Verfahrens zum Testen eines auf einem Speicher eines elektrischen Gerätes gespeicherten Programms,
- Fig.3: ein schematisches Blockschaltbild eines ersten Ausführungsbeispiels einer Testvorrichtung zum Testen eines auf einem Speicher eines elektrischen Gerätes gespeicherten Programms,
- Fig.4: ein schematisches Blockschaltbild eines zweiten Ausführungsbeispiels einer Testvorrichtung zum Testen eines auf einem Speicher eines elektrischen Gerätes gespeicherten Programms,
- Fig.5: ein schematisches Blockschaltbild eines Ausführungsbeispiels einer Steuervorrichtung eines elektrischen Gerätes, und
- Fig. 6: ein schematisches Blockschaltbild eines Ausführungsbeispiels eines elektrischen Gerätes.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

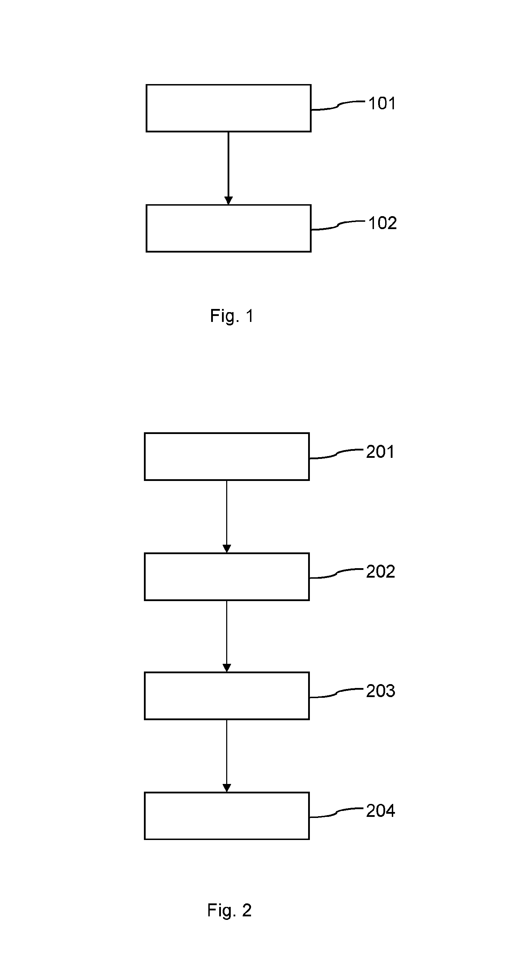

In Fig. 1 ist ein schematisches Ablaufdiagramm eines ersten Ausführungsbeispiels eines Verfahrens zum Testen eines auf einem Speicher 2 eines elektrischen Gerätes 3 gespeicherten Programms P dargestellt.

Das Programm P besteht aus einer Mehrzahl von Modulen M1-M4. Die Module M1-M4 können auch als Programmmodule oder als Programmteile bezeichnet werden, welche über Schnittstellen miteinander kommunizieren können.

In Schritt 101 wird das Programm P während des Programmlaufs des Programms P auf dem elektrischen Gerät 3 mittels zumindest eines vorbestimmten Sicherheitstests ST getestet.

In Schritt 102 wird zumindest ein Modul M1-M4 der Mehrzahl der Module M1-M4 während des Programmlaufs des Programms P auf dem elektrischen Gerät 3 mittels zumindest eines vorbestimmten Modultests MT1-MT4 getestet.

Fig. 2 zeigt ein schematisches Ablaufdiagramm eines zweiten Ausführungsbeispiels eines Verfahrens zum Testen eines auf einem Speicher 2 eines elektrischen Gerätes 3 gespeicherten Programms P. Das Programm P hat eine Mehrzahl von Modulen M1-M4 oder Programmmodulen.

In Schritt 201 wird eine Mehrzahl vorbestimmter Modultests MT1-MT4 bereitgestellt. Jeweils ein Modultest MT1-MT4 ist zum Testen eines bestimmten Moduls M1-M4 der Mehrzahl der Module vorbestimmt und geeignet.

In Schritt 202 wird das Programm P während des Programmlaufs mittels zumindest eines vorbestimmten Sicherheitstests ST getestet. Dabei wird insbesondere zumindest eine Hardware-Komponente des elektrischen Gerätes 3 mittels des zumindest einen Sicherheitstests ST während des Programmlaufs getestet.

In Schritt 203 wird jedes Modul M1-M4 der Mehrzahl der Module M1-M4 mittels des jeweiligen zugeordneten Modultests MT1-MT4 während des Programmlaufs getestet. Beispielsweise ist dem Modul M1 der Modultest MT1 zugeordnet. Dem Modul M2 ist der Modultest MT2 zugeordnet. Entsprechend sind dem Modul M3 der Modultest MT3 und dem Modul M4 der Modultest MT4 zugeordnet.

Bei dem jeweiligen Modultest MT1-MT4 werden dem Modul M1-M4 feste Eingangsgrößen eingegeben. Die festen Eingangsgrößen ergeben sich aus dem Modultest MT1-MT4, der dem jeweiligen Modul M1-M4 zugeordnet ist. Die nach der Eingabe der festen Eingangsgrößen resultierenden Ausgangsgrößen werden erfasst. Die erfassten Ausgangsgrößen werden mit Soll-Ausgangsgrößen zur Bereitstellung eines Modultest-Ergebnisses E verglichen.

Im Schritt 204 wird eine bestimmte Sicherheitsmaßnahme bei Vorliegen eines bestimmten Modultest-Ergebnisses E durchgeführt. Die bestimmte Sicherheitsmaßnahme kann aus einer Mehrzahl vorbestimmter Sicherheitsmaßnahmen in Abhängigkeit des jeweiligen Modultest-Ergebnisses E gewählt werden.

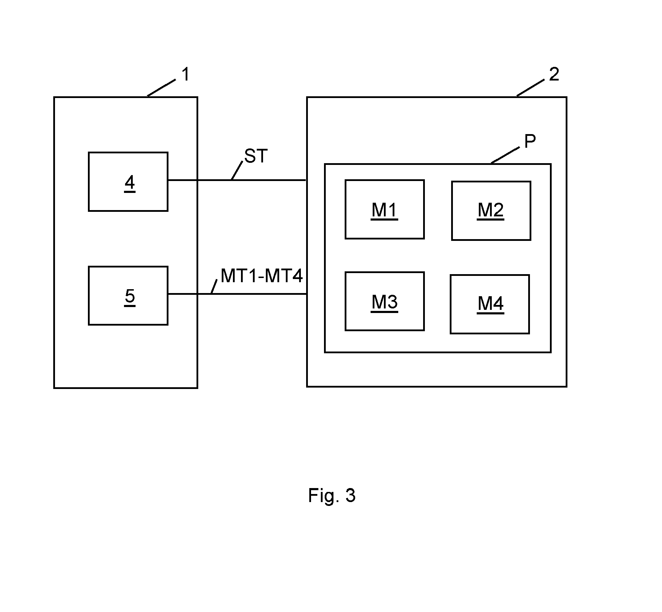

In Fig. 3 ist ein schematisches Blockschaltbild eines ersten Ausführungsbeispiels einer Testvorrichtung 1 zum Testen eines auf einem Speicher 2 eines elektrischen Gerätes 3 gespeicherten Programms P dargestellt. Das Programm P umfasst zumindest eine Mehrzahl von Modulen M1-M4.

Die Testvorrichtung 1 hat ein erstes Testmittel 4 und ein zweites Testmittel 5.

Das erste Testmittel 4 ist dazu eingerichtet, das Programm P während des Programmlaufs des Programms P auf dem elektrischen Gerät 3 zu testen. Dazu setzt das erste Testmittel 4 zumindest einen vorbestimmten Sicherheitstest ST ein.

Das zweite Testmittel 5 ist zum Testen zumindest eines Moduls M1-M4 der Mehrzahl der Module M1-M4 während des Programmlaufs des Programms P auf dem elektrischen Gerät 3 eingerichtet. Dazu setzt das zweite Testmittel 5 zumindest einen vorbestimmten Modultest MT1-MT4 ein.

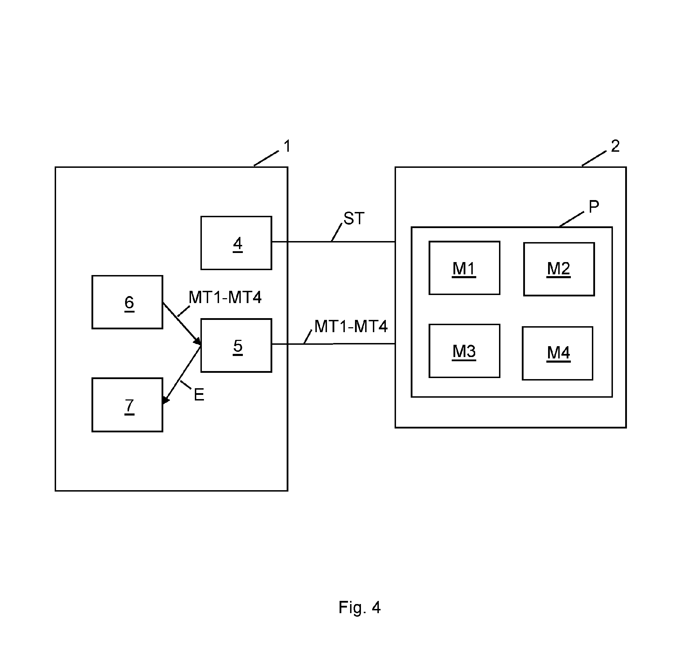

In Fig. 4 ist ein schematisches Blockschaltbild eines zweiten Ausführungsbeispiels einer Testvorrichtung 1 dargestellt. Die Testvorrichtung 1 der Fig. 4 umfasst alle Merkmale der Testvorrichtung 1 der Fig. 3 und darüber hinaus eine Speichervorrichtung 6 und ein Sicherheitsmittel 7.

Die Speichervorrichtung 6 ist dazu eingerichtet, die Mehrzahl vorbestimmter Modultests MT1-MT4 zu speichern.

Das Sicherheitsmittel 7 ist dazu eingerichtet, bei Vorliegen eines bestimmten Modultest-Ergebnisses E eine bestimmte Sicherheitsmaßnahme aus einer Mehrzahl vorbestimmter Sicherheitsmaßnahmen auszuwählen und durchzuführen. Die Mehrzahl vorbestimmter Sicherheitsmaßnahmen kann in der Speichervorrichtung 6 gespeichert werden.

Insbesondere ist das zweite Testmittel 5 dazu eingerichtet, alle Module M1-M4 mittels der Modultests MT1-MT4 während des Programmlaufs zu testen. Dabei wird das zweite Testmittel 5 dem jeweiligen Modul M1-M4 feste Eingangsgrößen eingeben, die nach der Eingabe der festen Eingangsgrößen resultierenden Ausgangsgrößen erfassen und die erfassten Ausgangsgrößen mit Soll-Ausgangsgrößen zur Bereitstellung eines Modultest-Ergebnisses E vergleichen.

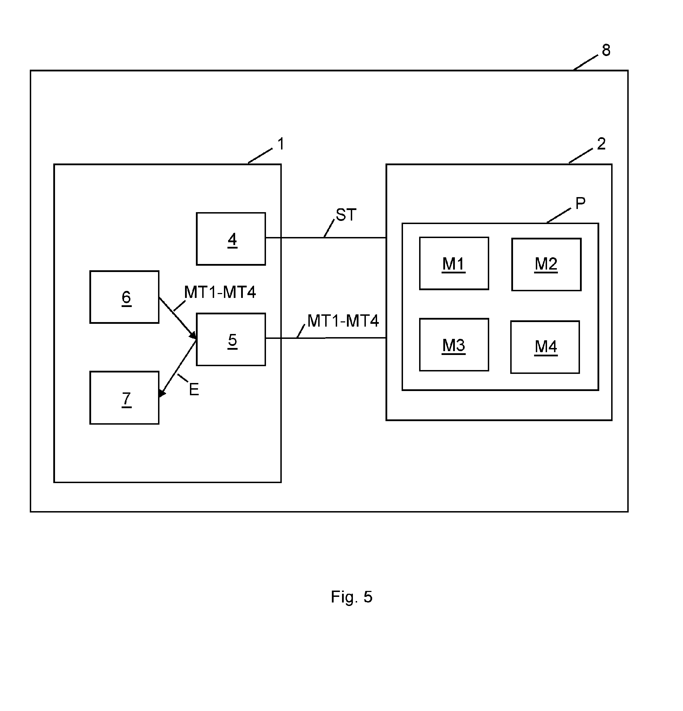

In Fig. 5 ist ein schematisches Blockschaltbild eines Ausführungsbeispiels einer Steuervorrichtung 8 eines elektrischen Gerätes 3 dargestellt. Die Steuervorrichtung 8 weist die Vorrichtung 1 nach Fig. 4 auf. Alternativ kann die Steuervorrichtung 8 die Vorrichtung 1 nach Fig. 3 aufweisen. Die Steuervorrichtung 8 ist beispielsweise ein Mikrocontroller des elektrischen Gerätes 3.

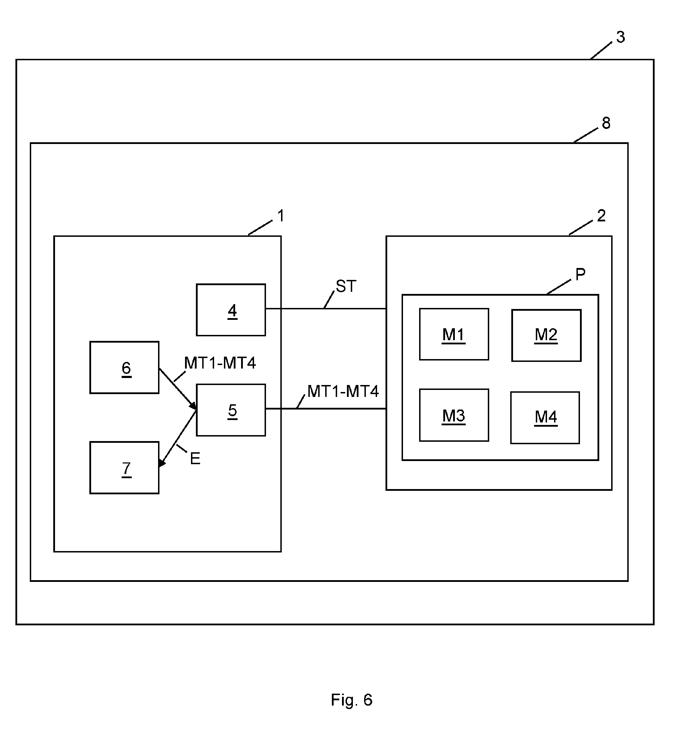

Fig. 6 zeigt ein schematisches Blockschaltbild eines Ausführungsbeispiels eines elektrischen Gerätes 3. Das elektrische Gerät 3 weist die Steuervorrichtung 8 nach Fig. 5 auf. Das elektrische Gerät 3 ist beispielsweise eine Handwerkzeugmaschine. Das elektrische Gerät 3 kann auch ein Akkumulator für eine Handwerkzeugmaschine sein.

## Patentansprüche

1. Verfahren zum Testen eines auf einem Speicher (2) eines elektrischen Gerätes (3) gespeicherten Programms (P) aus einer Mehrzahl von Modulen (M1-M4), mit den Schritten:
Testen des Programms (P) während des Programmlaufs mittels zumindest eines vorbestimmten Sicherheitstests (ST), und
Testen zumindest eines Moduls (M1-M4) der Mehrzahl von Modulen (M1-M4) während des Programmlaufs mittels zumindest eines vorbestimmten Modultests (MT1-MT4).

2. Verfahren nach Anspruch 1, **dadurch gekennzeichnet, dass** eine Mehrzahl vorbestimmter Modultests (MT1-MT4) bereitgestellt wird, wobei jeweils ein Modultest (MT1-MT4) der Mehrzahl vorbestimmter Modultests (MT1-MT4) zum Testen eines Moduls (M1-M4) der Mehrzahl der Module (M1-M4) vorbestimmt wird.

3. Verfahren nach Anspruch 2, **dadurch gekennzeichnet, dass** jedes Modul (M1-M4) der Mehrzahl der Module (M1-M4) mittels des jeweiligen zugeordneten Modultests (MT1-MT4) während des Programmlaufs getestet wird.

4. Verfahren nach Anspruch 2 oder 3, **dadurch gekennzeichnet, dass** bei dem jeweiligen Modultest (MT1-MT4) dem Modul (M1-M4) feste Eingangsgrößen eingegeben werden, die nach der Eingabe der festen Eingangsgrößen resultierenden Ausgangsgrößen erfasst werden, und die erfassten Ausgangsgrößen mit Soll-Ausgangsgrößen zur Bereitstellung eines Modultest-Ergebnisses (E) verglichen werden.

5. Verfahren nach Anspruch 4, **dadurch gekennzeichnet, dass** bei Vorliegen eines bestimmten Modultest-Ergebnisses (E) eine bestimmte Sicherheitsmaßnahme aus einer Mehrzahl vorbestimmter Sicherheitsmaßnahmen ausgewählt und durchgeführt wird.

6. Verfahren nach einem der vorhergehenden Ansprüche, **dadurch gekennzeichnet, dass** zumindest eine Hardware-Komponente des elektrischen Gerätes (3) mittels des zumindest einen Sicherheitstests (ST) während des Programmlaufs getestet wird.

7. Testvorrichtung (1) zum Testen eines auf einem Speicher (2) eines elektrischen Gerätes (3) gespeicherten Programms (P) aus einer Mehrzahl von Modulen (M1-M4), mit:
einem ersten Testmittel (4) zum Testen des Programms (P) während des Programmlaufs mittels zumindest eines vorbestimmten Sicherheitstests (ST), und einem zweiten Testmittel (5) zum Testen zumindest eines Moduls (M1-M4) der Mehrzahl von Modulen (M1-M4) während des Programmlaufs mittels zumindest eines vorbestimmten Modultests (MT1-MT4).

8. Testvorrichtung nach Anspruch 7, **dadurch gekennzeichnet, dass** eine Speichervorrichtung (6) zum Speichern einer Mehrzahl vorbestimmter Modultests (MT1-MT4) vorgesehen ist, wobei jeweils ein Modultest (MT1-MT4) der Mehrzahl vorbestimmter Modultests (MT1-MT4) zum Testen eines Moduls (M1-M4) der Mehrzahl der Module (M1-M4) vorbestimmt ist.

9. Testvorrichtung nach Anspruch 8, **dadurch gekennzeichnet, dass** das zweite Testmittel (5) dazu eingerichtet ist, ein jedes Modul (M1-M4) der Mehrzahl der Module (M1-M4) mittels des jeweiligen zugeordneten Modultests (MT1-MT4) während des Programmlaufs zu testen.

10. Testvorrichtung nach Anspruch 8 oder 9, **dadurch gekennzeichnet, dass** das zweite Testmittel (5) dazu eingerichtet ist, dem jeweiligen Modul (M1-M4) bei dem jeweiligen zugeordneten Modultest (MT1-MT4) feste Eingangsgrößen einzugeben, die nach der Eingabe der festen Eingangsgrößen resultierenden Ausgangsgrößen zu erfassen und die erfassten Ausgangsgrößen mit Soll-Ausgangsgrößen zur Bereitstellung eines Modultest-Ergebnisses (E) zu vergleichen.

11. Testvorrichtung nach einem der vorhergehenden Ansprüche 7 bis 10, **dadurch gekennzeichnet, dass** ein Sicherheitsmittel (7) vorgesehen ist, welches dazu eingerichtet ist, bei Vorliegen eines bestimmten Modultest-Ergebnisses (E) eine bestimmte Sicherheitsmaßnahme aus einer Mehrzahl vorbestimmter Sicherheitsmaßnahmen auszuwählen und durchzuführen.

12. Steuervorrichtung (8) zum Steuern eines elektrischen Gerätes (3), welche eine Testvorrichtung (1) zum Testen eines auf einem Speicher (2) des elektrischen Gerätes (3) gespeicherten Programms (P) aus einer Mehrzahl von Modulen (M1-M4) nach einem der Ansprüche 1 bis 11 aufweist.

13. Elektrisches Gerät (3) mit einer Testvorrichtung (1) zum Testen eines auf einem Speicher (2) des elektrischen Gerätes (3) gespeicherten Programms (P) aus einer Mehrzahl von Modulen (M1-M4) nach einem der Ansprüche 1 bis 11.

14. Elektrisches Gerät nach Anspruch 13, **dadurch gekennzeichnet, dass** das elektrische Gerät (3) eine Handwerkzeugmaschine oder ein Akkumulator für eine Handwerkzeugmaschine ist.
